# EUROPEAN PATENT APPLICATION

(11) **EP 1 156 502 A1**
(43) Date of publication of application: **21.11.2001**
(21) Application number: 00937248.3
(22) Date of filing: 15.06.2000
(51) Int. Cl.: H01H 33/36, H01H 31/02

(54) **ACTUATOR OF POWER LOAD-BREAK SWITCH**

(30) Priority: 03.12.1999 JP 34464999
(71) Applicant: MITSUBISHI DENKI KABUSHIKI KAISHA, Tokyo 100-8310 (JP)
(72) Inventor: KOBAYASHI, Minoru, Mitsubishi Denki KK, Chiyoda-ku, Tokyo 100-8310 (JP); MARUYAMA, Toshimasa, Mitsubishi Denki KK, Chiyoda-ku, Tokyo 100-8310 (JP); SATO, Toshifumi, Mitsubishi Denki KK, Chiyoda-ku, Tokyo 100-8310 (JP); MIYAMOTO, Seiichi, Mitsubishi Denki KK, Chiyoda-ku, Tokyo 100-8310 (JP); ITOTANI, Takayuki, Mitsubishi Denki KK, Chiyoda-ku, Tokyo 100-8310 (JP)
(74) Representative: HOFFMANN - EITLE
(86) International application number: JP0003906
(87) International publication number: WO0141172

(57) **Abstract**

This invention has as an object to provide an operating apparatus for an electric power load break switch which seeks increases in the efficiency of force transmission and decreases in size.

Its constitution is one in which rotational movement from a drive shaft of a drive mechanism is transmitted as rotational movement to an operating member secured to an output shaft through an input spur gear, a cylindrical roller, a rotating lever, etc., without being converted to linear movement. Transmission of movement between the cylindrical roller and the rotating lever is carried out by contact of the side surface of the cylindrical roller with a closed cam hole provided in the rotating lever.

## Description

### Technical Field

This invention relates to an operating apparatus for an electric power load break switch such as a disconnect switch or a grounding switch.

### Background Art

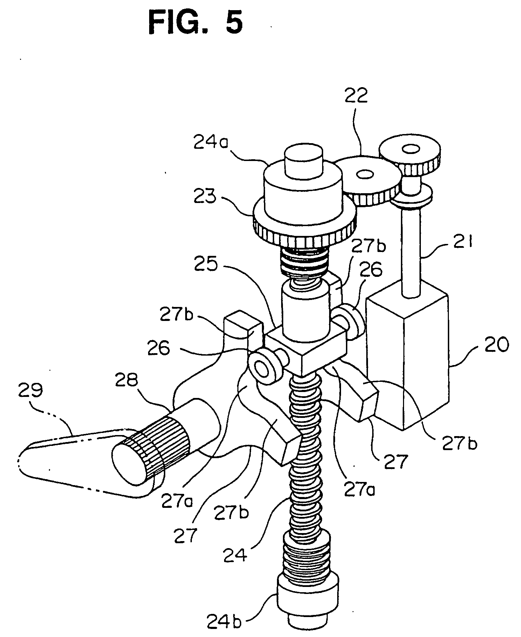

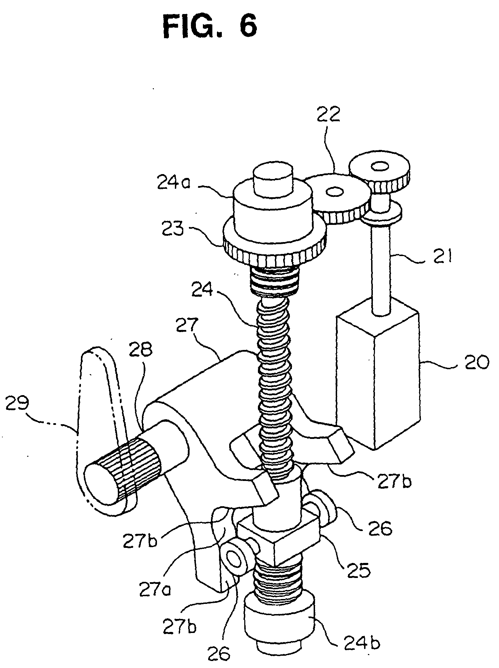

As a conventional operating mechanism for an electric power load break switch, one having a structure like that shown in Figure 5 and Figure 6, for example, is known. Figure 5 shows the state in which the contacts (not shown) of an operating mechanism in a conventional electric power load break switch are open, and Figure 6 shows the state in which the contacts are closed.

In this conventional apparatus, 20 is a drive mechanism which can be driven by an electric motor or manually, and 21 is a drive shaft of the drive mechanism 20. The torque of the drive shaft 21 is transmitted to a spur gear 23 by a spur gear 22. 24 is an input shaft in the form of a shaft with a trapezoidal thread. It is supported by bearings 24a and 24b at both end portions, and spur gear 23 is secured to one end portion. A nut 25 with a trapezoidal thread having a roughly rectangular outer shape is threaded onto the trapezoidal thread shaft 24. Rollers 26 are mounted on both side surfaces of the trapezoidal thread nut 25 so as to be orthogonal to the trapezoidal thread shaft 24. A V-shaped lever 27 having at both side portions a portion joined to one of the rollers 26 and formed into roughly the shape of a V by a curved portion 27a and two straight portions 27b is secured to an output shaft 28 which is parallel to the rollers 26. An operating member 29 (shown by the double dot chain line in Figures 5 and 6) is secured to one end of the output shaft 28. The operating member 29 performs switching operation of an unillustrated contact mechanism, and it opens and closes an electric circuit.

In the above-described conventional operating apparatus for an electric power load break switch, if the drive shaft 21 is rotated by electric power or manually, its torque is transmitted to the trapezoidal thread shaft 24 through the spur gears 22 and 23, and the trapezoidal thread shaft 24 rotates. As a result, the trapezoidal thread nut 25 moves in a straight line in the axial direction (upwards and downwards in Figure 5 and Figure 6). Along with this, the two rollers 26 which are mounted on the trapezoidal thread nut 25 move in a straight line in the axial direction of the trapezoidal thread shaft 24 while contacting the curved portions 27a or the straight portions 27b of the V-shaped lever 27. At this time, when the two rollers 26 contact the curved portions 27a and move in a straight line, the rollers 26 press the V-shaped lever 27, and they rotate the V-shaped lever 27 about the center of the output shaft 28 of the operating mechanism, and along with this, they rotate the output shaft 28 of the operating mechanism. As a result, the operating member 29 rotates, the unillustrated contact mechanism is driven, and the contacts (not shown) are made to perform switching operation.

Stop control of the electric motor which forms the drive source of the drive mechanism 20 is performed by detecting the rotational position of the operating member 29 after the completion of switching of the unillustrated contacts. When the electric motor is stopped, the electric motor performs a few rotations due to inertia after stopping operation. This phenomenon is the same in either forward or reverse, i.e., in both the direction performing closing operation or the direction performing opening operation of the contacts. Due to this rotation, the rollers 26 perform extra linear movement by this amount. However, it is necessary for the stopped position of the contacts not to change as a result of this. Therefore, the linear portions 27b are formed on both sides of the curved portions 27a of the V-shaped lever 27 so that even if the rollers 26 continue linear movement in either the forward or reverse direction, the V-shaped lever 27 does not rotate and is fixed in a prescribed position.

Accordingly, it is insufficient for the length of the trapezoidal thread shaft 24 to be only a length necessary to drive the V-shaped lever 27, and it must be lengthened by an amount by which the rollers 26 perform linear movement while the rollers 26 contact the linear portions 27b. Naturally, the bearings 24a and 24b for the shaft 24 are disposed and secured outside the drive region of the rollers 26.

In this manner, in this conventional operating apparatus for an electric power load break switch, the input rotational movement is converted to linear movement by the lengthened trapezoidal thread screw 24, so the space required for clearance becomes large. Furthermore, the longer is the trapezoidal thread screw 24, the larger is the bending stress applied by the spur gear 23, so there was the problem that a stiff, large-diameter trapezoidal thread screw was necessary. In addition, the transmission efficiency of the trapezoidal thread screw 24 is relatively small, so there was the problem that in order to compensate for this, a large input force, i.e., a motor with a large output or a large manual force was necessary.

In addition, when the V-shaped lever 27 contacts the rollers 26 and performs rotational movement due to the rollers 26, since it has a cantilever structure, bending stresses are generated, and the base portions of the V-shaped lever 27 must have a stiffness which can withstand the bending stresses which are generated. Therefore, it was necessary for the V-shaped lever 27 to have a somewhat large shape or to have its strength increased by heat treatment or the like. Furthermore, when the V-shaped lever 27 is made large, the range of its operation increases, and there was the problem that further free space was necessary in order to guarantee its operating range.

This invention was made in order to solve problems like those described above. Its object is to provide an operating apparatus for an electric power load break switch which renders unnecessary a trapezoidal thread screw and a V-shaped lever, which require wasted space and bending stiffness, and which increases the efficiency of power transmission and seeks decrease in size.

### Disclosure of the Invention

In order to satisfy the above-described object, the present invention is one having a drive mechanism with a drive source in the form of an electric motor, a drive shaft, and the like, an input shaft which transmits rotational drive force from the drive mechanism, an input spur gear which is secured to the input shaft and which rotates with the input shaft, a cylindrical roller which has a shaft center which is spaced from the input shaft and is parallel to the input shaft and which projects from the side surface of the input spur gear and which is formed so as to revolve about the input shaft due to rotation of the input spur gear, an output shaft which is disposed so as to be parallel to the input shaft and the cylindrical roller, a rotating lever which has at one end a cam hole which is in contact with the side surface of the cylindrical roller and which has another end through which the output shaft passes and which is secured to the output shaft and rotates as a single member with the output shaft, and an operating member which operates a contact mechanism by the torque of the output shaft, wherein the end surface of the cam hole of the rotating lever has two cam surface portions for forward and reverse rotation which are formed so as to contact the side surface of the cylindrical roller when the cylindrical roller revolves forwards or in reverse in a prescribed angular range and so that the rotating lever rotates the output shaft as a rotating shaft in the forward or reverse direction due to the force transmitted by this contact, two recessed curved surface portions for forward and reverse rotation which contact the side surface of the cylindrical roller after the electric motor has stopped and when the cylindrical roller further revolves in the forward or reverse direction beyond the prescribed angular range due to inertia and which are formed with a shape which matches the path of the cylindrical roller so that the rotating lever will not rotate about the output shaft under the force transmitted through the contact, and a play surface portion formed between the two cam surfaces.

In the above description, "in the forward or reverse directions" means "in a direction which opens or closes a contact mechanism of an operating apparatus of an electric power load break switch, and "two ... for forward and reverse rotation" means "two including that for opening a contact mechanism of an operating apparatus for an electric power load break switch and that for closing the contact mechanism".

In this invention, the cam hole is formed so that the two recessed curved surface portions for forward and reverse rotation are joined to each other at their ends.

Accordingly, in an operating apparatus for an electric power load break switch constituted as described above, rotational movement from the drive shaft is transmitted to the operating member secured to the output shaft as rotational movement through the input spur gear, the cylindrical roller, and the rotating lever without being converted to linear movement. As a result, an electric power load break switch according to this invention does not need a large-diameter trapezoidal thread screw which requires wasted space and bending stiffness, and additionally, the transmission efficiency is increased, so the input force is decreased.

In addition, the rotating lever which transmits rotational movement to the operating member which operates the contact mechanism has a cam hole, and it does not need a conventional roughly V-shaped member. Furthermore, as in a second invention, if the shape of the cam hole is such as to be closed at the ends thereof, the section modulus of the rotating lever with respect to bending at the time of contacting the cylindrical roller can be increased, and the stiffness of the rotating lever can be increased, so the rotating lever can be made compact.

### Brief Description of the Drawings

Figure 1 is an explanatory view of the operation of an operating apparatus for an electric power load break switch according to an embodiment of the present invention.
Figure 2 is an explanatory view of the structure of the operating apparatus for an electric power load break switch of Figure 1 as seen from the front.
Figure 3 is an explanatory view of the structure of the operating apparatus for an electric power load break switch of Figure 1 as seen from the side.
Figure 4 is an enlarged view of a rotating lever according to an embodiment of this invention.
Figure 5 is an explanatory view of the structure of a conventional operating apparatus for an electric power load break switch at the time of an open contact state.
Figure 6 is an explanatory view of the structure of the operating apparatus for an electric power load break switch of Figure 5 at the time of a closed contact state.

### Best Mode for Carrying Out the Invention

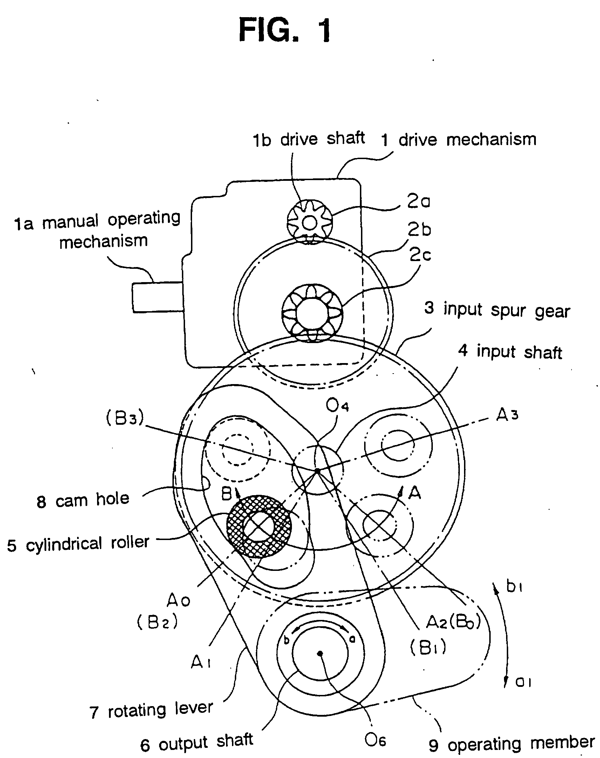

Below, a concrete embodiment of an operating apparatus for an electric power load break switch of this invention will be explained in detail based on Figures 1-4.

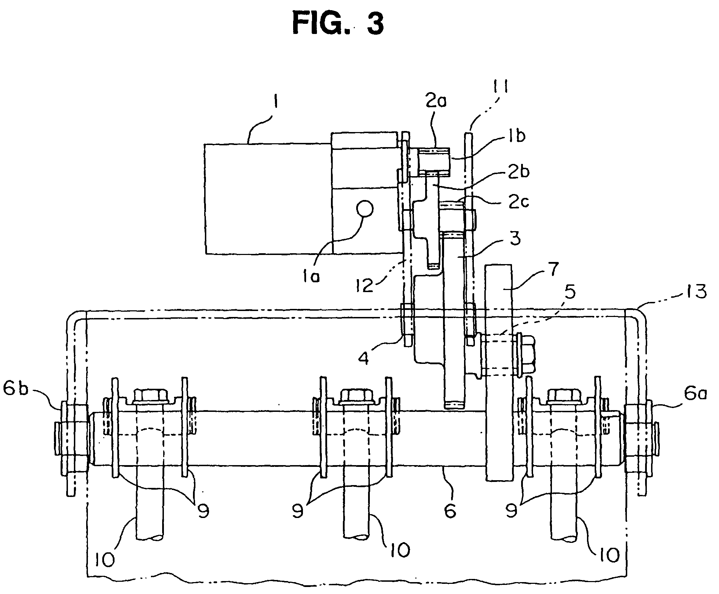

In these figures, 1 is a drive mechanism which is constituted so as to be capable of being driven by an electric motor and manually. As shown in Figure 3, it is secured to one side (the left side in Figure 3) of two support plates 11 and 12 which are perpendicular to a casing 13 and parallel to each other. This drive mechanism 1 has a manual operating shaft 1 a and a drive shaft 1b. Torque from the drive shaft 1b of the drive mechanism 1 is transmitted to an input spur gear 3, which is secured to an input shaft 4, through an intermediate transmission mechanism made from intermediate spur gears 2a, 2b, 2c, and the like and disposed between the two support plates 11 and 12. By selectively rotating the drive shaft 1b forwards or in reverse by the drive of the drive mechanism 1, the input spur gear 3 is selectively rotated forwards or in reverse in direction A or B (see Figure 1). Although not shown in detail, the input shaft 4 is mounted on the casing 13 by suitable means.

A cylindrical roller 5 is mounted on the side surface portion of the input spur gear 3. The shaft center of the cylindrical roller 5 is parallel to the shaft center of the input shaft 4. When the input spur gear 3 is selectively rotated in the forward or reverse direction in direction A or B, the cylindrical roller 5 is selectively revolved in the forward or reverse direction in direction A or B about the shaft center O₄ of the input shaft 4. 6 is an output shaft which is parallel to and spaced from the input shaft 4 and the cylindrical roller 5. The output shaft 6 is supported by bearings 6a and 6b mounted on the casing 13. A rotating lever 7 is secured to the output shaft 6. The rotating lever 7 has roughly the shape of the sole of a shoe. A roughly gourd-shaped cam hole 8 which is in line contact with the side surface of the cylindrical roller 5 is formed in the end side portion (the opposite side from the output shaft 6) of the rotating lever 7.

The cam hole 8 is for the purpose of transmitting the torque of the input spur gear 3 to the output shaft 6 through the cylindrical roller 5. This point will be described more concretely.

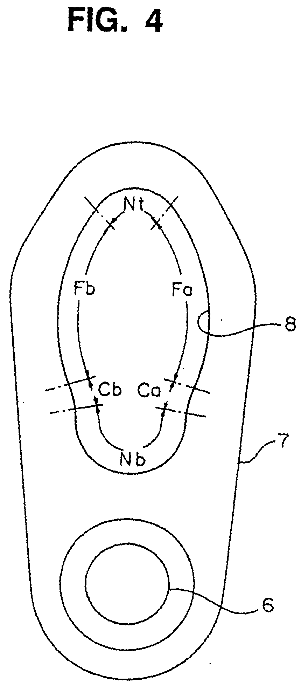

In Figure 1, when the input spur gear 3 rotates in direction A, i.e., when the cylindrical roller 5 revolves in direction A, the side surface of the cylindrical roller 5 is in line contact with cam surface portion Ca of the cam hole 8 (see Figure 4), and it presses the rotating lever 7 in direction A. As a result, the rotating lever 7 and the output shaft 6 rotate as a single body in direction a. Cam surface portion Ca (see Figure 4) is formed so that at this time, as the cylindrical roller 5 rotates from angular position A₁ to angular position A₂ (B₀), the end side of the rotating lever 7 synchronously rotates in direction a. When the cylindrical roller 5 rotates to angular position A₂ (B₀), the electric motor within the drive mechanism 1 is stopped, but the electric motor rotates further due to inertia, so the cylindrical roller 5 rotates further in direction A. Recessed surface portion Fa (see Figure 4) of the cam hole 8 is made a curved surface which coincides with the rotational path of the cylindrical roller 5 so that at this time, the output shaft 6 will not rotate further in direction a due to rotation of the cylindrical roller 5.

When the input spur gear 3 rotates in direction B, i.e., when the cylindrical roller 5 revolves in direction B, the side surface of the cylindrical roller 5 is in line contact with cam surface portion Cb of the cam hole 8 (see Figure 4), and it presses the rotating lever 7 in direction B. As a result, the rotating lever 7 and the output shaft 6 rotate as a single body in direction b. Cam surface portion Cb is formed so that at this time, in synchrony with the rotation of the rotating lever 7 from angular position B₁ to angular position B₂ (A₀), the end side of the rotating lever 7 rotates in direction a. The electric motor within the drive mechanism 1 is stopped when the cylindrical roller 5 rotates to angular position B₂ (A₀), but the electric motor further rotates due to inertia, so the cylindrical roller 5 further rotates in direction B. Recessed surface portion Fb of the cam hole 8 (see Figure 4) has a curved surface which coincides with the path of rotation of the cylindrical roller 5 so that at this time, the output shaft 6 will not further rotate in direction b due to the rotation of the cylindrical roller 5.

In Figure 4, between cam surface portion Ca and cam surface portion Cb in the cam hole 8, play surface portion Nb is formed so that the side surface of the cylindrical roller 5 will not interfere with the cam hole 8. This play surface portion Nb is formed so that a roughly elliptical space which is slightly larger than the diameter of the cylindrical roller 5 is formed.

The end portion of the cam hole 8 between recessed surface portion Fa and recessed surface portion Fb extends recessed surface portion Fa and recessed surface portion Fb and joins them, and it is a play surface portion Nt which is formed with a shape which closes the cam hole 8.

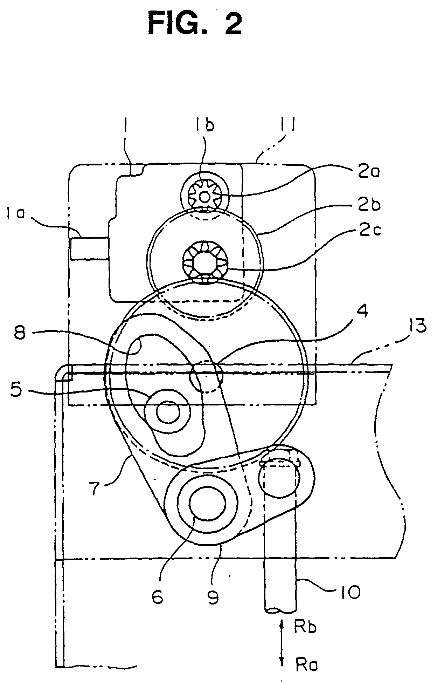

As shown in Figure 2, in a plurality of locations, operating members 9 which are formed as levers for operating unillustrated contact mechanisms are secured to the output shaft 6. A rod 10 which converts the rotational movement of one of the operating members 9 into linear movement and transmits it to a contact mechanism is rotatably supported at the end portion of each operating member 9.

Next, the operation of an operating mechanism for an electric power load break switch constituted as described above will be explained. In the following explanation, direction A is the rotational direction of the input spur gear 3 when the unillustrated contacts are closed. Conversely, direction B is the rotational direction of the input spur gear 3 when the unillustrated contacts are opened.

First, when closing the contacts of the unillustrated electric power load break switch, the drive shaft 1b is rotated by electric power or manually and the input spur gear 3 is rotated in direction A. As a result, the cylindrical roller 5 which is mounted on the input spur gear 3 revolves in direction A about the shaft center O₄ of the input shaft 4. When the cylindrical roller 5 rotates from angular position A₁ to angular position A₂, cam surface portion Ca of the cam hole 8 in the rotating lever 7 is pressed by the side surface of the cylindrical roller 5, and the output shaft 6 is rotated together with the rotating lever 7 about its shaft center O₆ by a prescribed angle in direction a. As a result, the operating members 9 which are secured to the output shaft 6 rotate in direction a₁ (see Figure 1), the rods 10 move in a straight line in direction Ra (see Figure 2), and the contacts of the unillustrated electric power load break switch are closed.

When the contacts are closed as described above, stop control of the electric motor within the drive mechanism 1 is carried out by an unillustrated limit switch, but the electric motor rotates several times due to inertia. As a result, the cylindrical roller 5 further rotates, but as described above, the side surface of the cylindrical roller 5 is contacting recessed surface portion Fa of the cam hole 8, so the rotating lever 7 does not further rotate, and the contacts of the unillustrated electric power load break switch are maintained with certainty in a closed state.

Next, when opening the contacts of the electric power load break switch, the drive shaft 1b is rotated by electric power or manually and the input spur gear 3 is rotated in direction B. As a result, the cylindrical roller 5 which is mounted on the input spur gear 3 revolves in direction B about the shaft center O₄ of the input shaft 4. Then, when the cylindrical roller 5 rotates from angle B₁ to angle B₂, cam surface portion Cb of the cam hole 8 in the rotating lever 7 is pressed by the side surface of the cylindrical roller 5, and the output shaft 6 rotates together with the rotating lever 7 by a prescribed angle in direction b about its shaft center O₆. As a result, the operating members 9 which are secured to the output shaft 6 rotate in direction b₁ (see Figure 1), the rods 10 move in a straight line in direction Rb (see Figure 2), and the contacts of the unillustrated electric power load break switch are opened.

When the contacts are opened in the above described manner, stop control of the electric motor within the drive mechanism 1 is carried out by an unillustrated limit switch, but the electric motor performs several rotations due to inertia. As a result, the cylindrical roller 5 further rotates, but the side surface of the cylindrical roller 5 contacts recessed surface portion Fb of the cam hole 8, so the rotating lever 7 does not further rotate, and the contacts of the unillustrated electric power load break switch are maintained with certainty in an open position.

As a contact mechanism for an electric power load break switch which is operated by the operating members 9 and the rods 10, one which is of the type in which contacts are disposed inside a vacuum chamber and elastic force from a spring is utilized as force for maintaining the contacts in a closed state may be used. In this type of contact mechanism, the contacts are maintained inside a vacuum chamber, so a self-closing force (namely, a force for closing on its own) acts when the contacts are open. Accordingly, in this case, the self-closing force acts on the operating members 9. However, in an operating mechanism for an electric power load break switch according to this embodiment, the structure is such that the self-closing force is overcome and the contacts are maintained with certainty in an open state. While operating the contacts from an open state to a closed state, the torque for rotating the rotating lever 7 can be decreased by the amount of the self-closing force.

Instead of a type which generates a self-closing force as described above, one in which blade-type contacts are disposed in air or in a gas may be used as the contact mechanism for the electric power load break switch. In this case, in order to press in the blade-type contacts, it is sufficient to have a force which can just overcome the frictional force necessary to dose the blade-type contacts, so the drive force of the drive mechanism 1 can be decreased. Accordingly, the cylindrical roller 5 and the rotating lever 7 can be made more compact, and the operating apparatus for the electric power load break switch can be made more compact.

This invention is constituted as described above, so effects like those described below can be provided.

According to this invention, rotational movement from a drive mechanism can be transmitted as such to an operating member which operates a contact mechanism of an electric power load break switch by an input spur gear, a rotating lever, etc., and a member which converts rotational movement to linear movement is not used, so a trapezoidal thread screw which is conventionally used and which requires wasted space and a large bending stiffness is not necessary. Accordingly, the transmission efficiency is increased, the input force is decreased, the electric motor may be a small one with a low output force, and the force during manual operation can also be decreased.

Furthermore, according to this invention, the shape of the rotating lever is not that of a V but is one having a closed cam hole, so it can have a large section modulus to resist bending stresses generated by contact between the cylindrical roller and the cam surfaces. Accordingly, it can have a higher stiffness and be made more compact than a conventional V-shaped lever. In addition, the operating range of the rotating lever is smaller than that of a conventional V-shaped lever, so the space required by the operating mechanism for an electric power load break switch can be decreased.

### Possibility of Industrial Use

As described above, an operating mechanism for an electric power load break switch according to the present invention can be used in large disconnect switches or grounding switches at transformer substations and the like as one which does not require a motor with a large output force or a large manual force.

## Claims

1. An operating apparatus for an electric power load break switch having a drive mechanism with a drive source in the form of an electric motor, a drive shaft, and the like,
an input shaft which transmits rotational drive force from the drive mechanism,
an input spur gear which is secured to the input shaft and which rotates with the input shaft,
a cylindrical roller which has a shaft center which is spaced from the input shaft and is parallel to the input shaft and which projects from the side surface of the input spur gear and which is formed so as to revolve about the input shaft due to rotation of the input spur gear,
an output shaft which is disposed so as to be parallel to the input shaft and the cylindrical roller,
a rotating lever which has at one end a cam hole which is in contact with the side surface of the cylindrical roller and which has another end through which the output shaft passes and which is secured to the output shaft and rotates as a single member with the output shaft, and
an operating member which operates a contact mechanism by the torque of the output shaft,
**characterized in that** the end surface of the cam hole of the rotating lever has two cam surface portions for forward and reverse rotation which are formed so as to contact the side surface of the cylindrical roller when the cylindrical roller revolves forwards or in reverse in a prescribed angular range and so that the rotating lever rotates the output shaft as a rotating shaft in the forward or reverse direction due to the force transmitted by this contact, two recessed curved surface portions for forward and reverse rotation which contact the side surface of the cylindrical roller after the electric motor has stopped and when the cylindrical roller further revolves in the forward or reverse direction beyond the prescribed angular range due to inertia and which are formed with a shape which matches the path of the cylindrical roller so that the rotating lever will not rotate about the output shaft under the force transmitted through the contact, and a play surface portion formed between the two cam surfaces.
2. An operating apparatus for an electric power load break switch as claimed in claim 1 **characterized in that** the cam hole is formed such that two recessed curve surface portions for forward and reverse rotation are joined to each other at their ends.
